(19) 

Europäisches
Patentamt

European
Patent Office

Office européen
des brevets

(11) **EP 4 693 600 A1**

(12) **EUROPEAN PATENT APPLICATION**

published in accordance with Art. 153(4) EPC

(43) Date of publication:
**11.02.2026   Bulletin 2026/07**

(21) Application number: 25774688.3

(22) Date of filing: **20.03.2025**

(51) International Patent Classification (IPC):
*H01M 10/42* *(2006.01)*     *G01N 19/08* *(2006.01)*
*G01N 27/20* *(2006.01)*

(52) Cooperative Patent Classification (CPC):
**G01N 19/08; G01N 27/20; H01M 10/42;** Y02E 60/10

(86) International application number:
**PCT/KR2025/095007**

(87) International publication number:
**WO 2025/198377 (25.09.2025 Gazette 2025/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **22.03.2024   KR 20240039851**

(71) Applicant: **LG Energy Solution, Ltd.
Seoul 07335 (KR)**

(72) Inventor: **KANG, Dong Min
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **BATTERY CELL QUALITY INSPECTION DEVICE AND METHOD FOR INSPECTING QUALITY
OF BATTERY CELL THEREBY**

(57)     Disclosed herein relates to a battery cell quality inspection device for measuring the presence of cracks inside a battery cell and a method of battery cell quality inspection using the device. The battery cell quality inspection device of the present disclosure includes a pressurization chamber accommodating a battery cell therein; at least one pressurization unit coupled to the pressurization chamber to increase a pressure inside the pressurization chamber; and an instrument for measuring an insulation resistance of the battery cells accommodated inside the pressurization chamber, wherein the battery cell is contracted by increasing the pressure inside the pressurization chamber.

[FIG. 1]

**Description**

[Technical field]

The present disclosure relates to a battery cell quality inspection device capable of determining whether micro-cracks occur inside a battery cell, and a method for inspecting the quality of a battery cell using the device.
This application claims the benefit of Korean Patent Application No. 10-2024-0039851, filed on March 22, 2024, the disclosure of which is incorporated herein by reference.

[Background]

Secondary batteries that can be charged and discharged are attracting attention as a power source for devices that require high power and large capacity, including electric vehicles, hybrid electric vehicles, plug-in hybrid electric vehicles, and the like, which are being proposed as a way to solve air pollution from conventional gasoline and diesel vehicles that use fossil fuels.
In terms of battery shape, there is a high demand for prismatic and pouch-type secondary batteries, which can be applied to products such as mobile phones due to their thin thickness, and in terms of materials, there is a high demand for lithium secondary batteries such as lithium-ion batteries and lithium-ion polymer batteries, which have advantages such as high energy density, discharge voltage, and output stability.
These secondary batteries are also categorized according to the structure of the electrode assembly of the positive electrode/separator/negative electrode structure, such as a jelly-roll (winding type) electrode assembly, which is a structure in which the positive electrode and negative electrode are wound in a long sheet with a separator interposed therebetween, a stack-type (laminated type) electrode assembly, which is composed of multiple positive electrodes and negative electrodes cut into predetermined size units and laminated sequentially with a separator between them, and stack/folding type electrode assembly, which is composed of bi- or full-cell windings of predetermined size positive electrodes and negative electrodes stacked with a separator between them.
Secondary batteries have a structure in which electrode assemblies consisting of positive electrodes, negative electrodes, and separators interposed between them are accommodated in a battery case along with an electrolyte, and are sensitive to environmental factors because they are devices based on electrochemical reactions, and are manufactured through a series of processes in which small parts are carefully mounted and connected in a small space, so product quality can be degraded by errors in some devices and inexperience of some workers. In addition, in the manufacturing of secondary batteries by mass production systems, small defects in the process can lead to serious defects.
Therefore, it is essential that the secondary batteries are carefully inspected at each stage of the manufacturing process and/or after the finished product is manufactured. This inspection is one of the most important aspects of the production process of a secondary battery, as it ensures that it delivers the desired performance, reliability, etc. In this context, quality control is the ability to determine whether a secondary battery has the proper charge and discharge performance to produce good quality products and to weed out defective products. This quality control ensures that high-quality secondary batteries are produced.
Micro-cracks inside the battery case are one of the many causes of defects in secondary batteries. These micro-cracks can be infiltrated by electrolyte, and the infiltration of the electrolyte destroys the insulation of the battery case and creates a risk of current leakage.
In order to inspect the above micro-cracks, conventionally, instruments are connected to the battery case and electrode leads to observe the leakage current. However, this method not only increases the inspection time, but also has the problem that the electrolyte does not penetrate into the micro-cracks properly, making it difficult to observe the leakage current despite the presence of micro-cracks.
To solve the above problems, a method has been introduced to measure the leakage current by artificially infiltrating the electrolyte into the micro-cracks by physically pressing the finished secondary battery. However, pressurization by physical contact as described above has caused additional damage to the secondary battery case or the electrode assembly inside, so conventional inspection methods using physical pressurization have been abandoned. (Prior art reference) Korean Public Patent No.10-2023-0173521

[Summary]

[Technical Problem]

Therefore, the present disclosure was invented to solve the above problems, and aims to provide an inspection device and an inspection method that can check whether internal cracks occur without damaging battery cells.

Other objects and advantages of the present disclosure will be understood from the following description, and will become more apparent from the embodiments of the present disclosure. It will also be readily apparent that the objects and advantages of the present disclosure can be realized by the means and combinations thereof set forth in the claims of the patent.

[Technical Solution]

According to the present disclosure, there is provided a battery cell quality inspection device for measuring the presence of cracks inside a battery cell.

The battery cell quality inspection device includes: a pressurization chamber accommodating a battery cell therein; at least one pressurization unit coupled to the pressurization chamber to increase a pressure inside the pressurization chamber; and an instrument for measuring an insulation resistance of the battery cells accommodated inside the pressurization chamber, wherein the battery cell is contracted by increasing the pressure inside the pressurization chamber.

The pressurization unit may inject a gas inside the pressurization chamber to increase the pressure.

The pressurization chamber may have a sealed structure to prevent gas from entering or leaving the pressurization chamber.

The pressurization unit may pressurize the pressurization chamber such that the pressure inside the pressurization chamber is between 3 bar and 30 bar.

The pressurization chamber may have a strength that is not deformed by the pressure applied by the pressurization unit.

The instrument may be electrically connected to a battery cell accommodated inside the pressurization chamber to measure insulation resistance.

The battery cell is a pouch-type secondary battery including: an electrode assembly having alternately stacked electrodes and separators; a pair of electrode leads electrically connected to electrodes of the electrode assembly; a battery case enclosing the electrode assembly such that the electrode leads are drawn to the outside of the battery case; and an electrolyte filled inside the battery case with the electrode assembly.

The instrument is electrically connected to the battery case and the at least one electrode lead of the battery cell to apply a voltage and measure insulation resistance over time.

According to the present disclosure, a battery cell quality inspection method using the battery cell quality inspection device of the present disclosure is provided to measure whether a crack in the battery cell has occurred.

The battery cell quality inspection method includes: a first step of inserting a battery cell inside a pressurization chamber equipped with a pressurization unit; a second step of connecting an instrument to the battery cell; and a third step of increasing a pressure inside the pressurization chamber via the pressurization unit, wherein the pressure inside the pressurization chamber is increased to measure the insulation resistance of the battery cell via the instrument.

The pressurization unit may pressurize the pressurization chamber so that the pressure inside the pressurization chamber is from 3 bar to 30 bar.

The insulation resistance may be obtained by the following Equation 1.

[Equation 1]

$$Rx \text{ (insulation resistance)} = Va/Ib$$

(Va is a voltage applied by an instrument, Ib is a leakage current).

[Advantageous Effects]

According to the present disclosure, it is possible to effectively check whether cracks occur inside the battery cell without damaging the battery cell to be inspected.

[Brief Description of the Drawings]

FIG. 1 is a schematic diagram of the battery cell quality inspection device of the present disclosure.
FIG. 2 is a top view and a side view of a battery cell used for inspection.
FIG. 3 is a cross-sectional view of a portion of the battery cell of FIG. 2.

FIG. 4 is a simplified schematic diagram of an instrument of the present disclosure.

FIG. 5 is a schematic diagram illustrating a variant of the battery cell quality inspection device of the present disclosure.

FIG. 6 is a schematic representation of a process for the battery cell quality inspection method of the present disclosure.

FIG. 7 is a schematic cross-sectional view of the deformation of the inside of a battery cell due to pressurization.

[Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a battery cell quality inspection device capable of determining whether micro-cracks have occurred inside a battery cell, and a method for inspecting the quality of a battery cell using the device.

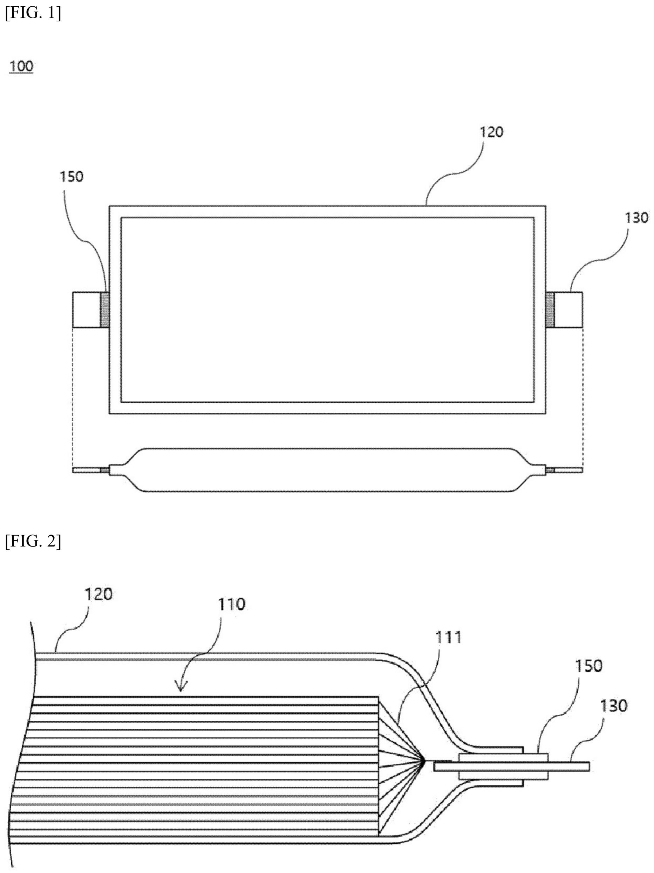

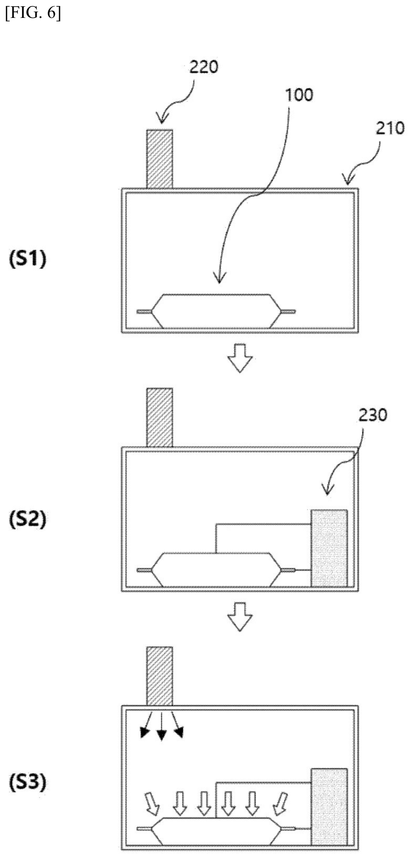

FIGS. 1 to 5 illustrate the battery cell quality inspection device of the present disclosure, and FIGS. 6 to 7 illustrate the battery cell quality inspection method of the present disclosure.

Hereinafter, specific embodiments of the battery cell quality inspection device and battery cell quality inspection method of the present disclosure will be described in detail with reference to the accompanying drawings. For reference, the directions of front and rear, up and down, left and right, which designate relative positions, used in the following description are for the purpose of understanding the disclosure, and refer to the directions shown in the drawings unless otherwise defined.

**Battery cell quality inspection device 200**

The battery cell quality inspection device 200 of the present disclosure measures the presence of cracks C inside the battery cell 100.

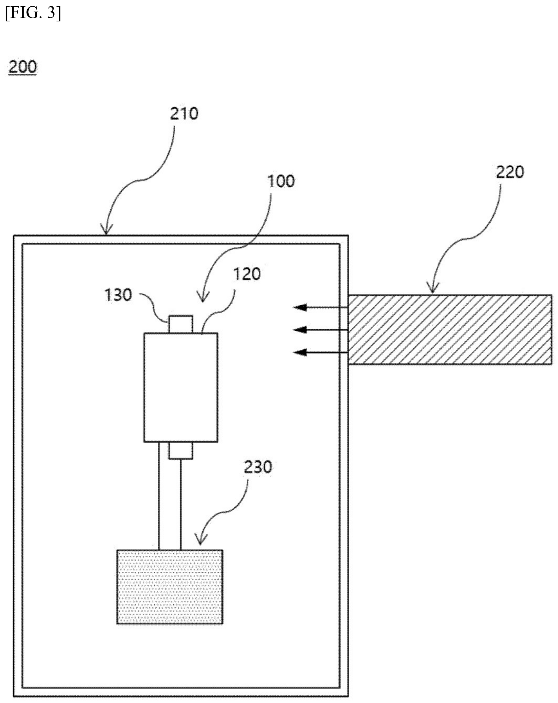

FIG. 1 is a simplified schematic diagram of the battery cell quality inspection device 200 of the present disclosure, FIG. 2 is a top and side view of a battery cell 100 used for inspection, and FIG. 3 is a cross-sectional view of a portion of the battery cell 100 of FIG. 2.

The battery cell 100 subject to measurement in the present disclosure has a pouch-type shape with electrode leads 130 protruding outwardly.

Specifically, the battery cell 100 is a pouch-type secondary battery including an electrode assembly 110 having alternately stacked electrodes and separators, a pair of electrode leads 130 electrically connected to the electrodes of the electrode assembly 110, a battery case 120 enclosing the electrode assembly 110 with the electrode leads 130 drawn to the outside of the battery case, and an electrolyte 140 filled inside the battery case 120 with the electrode assembly 110.

The electrode has an electrode tab 111 formed on one side and coated with an active material on the surface.

Specifically, the electrode may be a positive electrode with a slurry of positive electrode active material, binder resin, conductive agent, and other additives, etc. applied to at least one side of the current collector, or a negative electrode with a slurry of negative electrode active material, binder resin, conductive agent, and other additives, etc. applied to at least one side of the current collector. Thus, the electrode assembly 110 comprises alternately stacked positive electrodes, separators, and negative electrodes.

The electrode tabs 111 are electrically connected by being coupled to one electrode lead 130 in multiple layers as shown in FIG. 3.

Of the pair of electrode leads 130 included in the battery cell 100, one is a positive electrode lead electrically connected to the positive electrode of the electrode assembly 110, and the other is a negative electrode lead electrically connected to the negative electrode of the electrode assembly 110.

The separator may be a conventional porous polymeric film used in lithium secondary batteries.

The battery case 120 may be configured of aluminum material to maintain mechanical strength and prevent the penetration of moisture and oxygen, and its inner surface may be coated with a case film 160 of a material such as polyolefin.

The pair of electrode leads 130 may be drawn out on one side of the battery case 120, and may be drawn out on both sides of the battery case 120, as shown in FIG. 2.

Between the electrode leads 130 and the contact points of the battery case 120, an insulating film 150 composed of an insulating material may be interposed, as shown in FIG. 3, and the battery case 120 may be insulated by the insulating film 150.

Although not shown in FIG. 3, the interior of the battery case 120 is filled with electrolyte 140 along with the electrode assembly 110.

The battery case 120 is sealed by welding or the like to prevent leakage of the filled electrolyte 140 and gases generated by the electrode assembly 110 to the outside.

A pressurization chamber 210 provides a space in which the battery cell 100 to be measured is installed.

When high pressure is applied to the battery cell 100 accommodated in the pressurization chamber 210, the pressurization chamber 210 preferably has a strength to withstand the high pressure without being deformed by the increasing pressure.

Furthermore, the pressurization chamber 210 preferably has a sealed structure to prevent gas from entering or leaving.

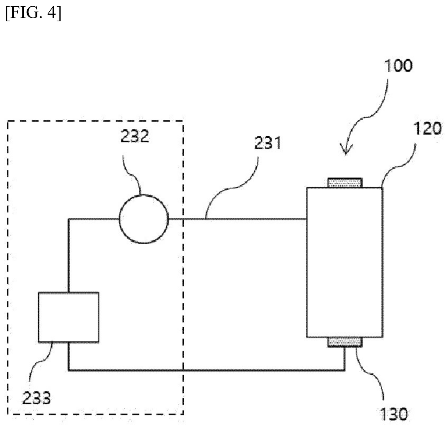

FIG. 4 is a simplified schematic diagram of an instrument 230 of the present disclosure.

The instrument 230 measures the insulation resistance of the battery cell 100 accommodated inside the pressurization chamber 210. More specifically, the instrument 230 is electrically connected to the battery cell 100 accommodated inside the pressurization chamber 210 to measure its insulation resistance.

The battery cell quality inspection device 200 of the present disclosure can use the instrument 230 to inspect the current in the battery cell 100 so as to measure the insulation resistance of the battery cell 100 .

The instrument 230 includes a power unit 232, a leakage current, and a wire 231 connecting the power unit 232 and the leakage current to the battery cell 100.

The instrument 230 is electrically connected with the battery case 120 and any one of the electrode leads 130 of the battery cell 100 using the conducting wires 231 as shown in FIGS. 1 and 4. The instrument 230 is electrically connected with the battery case 120 and the electrode leads 130 as described above to measure the insulation resistance of the cell 100 over time.

The instrument 230 is electrically connected with the battery case 120 and any one of the electrode leads 130 of the battery cell 100 using the wires 231 as shown in FIGS. 1 and 4. The instrument 230 is electrically connected with the battery case 120 and the electrode leads 130 as described above to measure the insulation resistance of the battery cell 100 over time.

The power unit 232 applies a voltage to the battery cell 100, and the current measurement unit 233 measures the leakage current.

The insulation resistance of the battery cell 100 is obtained by Equation 1 below.

[Equation 1]

$$Rx \text{ (insulation resistance)} = Va/Ib$$

(Va is the voltage applied by the instrument 230, and Ib is the leakage current).

A pressurization unit 220 is coupled to the pressurization chamber 210 and serves to increase the pressure inside the pressurization chamber 210.

In other words, the battery cell quality inspection device 200 of the present disclosure contracts the battery cell 100 by increasing the internal pressure of the pressurization chamber 210 with the pressurization unit 220, and measures the insulation resistance of the battery cell 100 using the instrument 230 while the battery cell 100 is contracted.

The pressurization unit 220 specifically injects gas inside the pressurization chamber 210 to increase its pressure. Thus, the battery cell 100 accommodated inside the pressurization chamber 210 may be partially contracted by the increasing pressure.

The pressurization unit 220 preferably pressurizes the pressurization chamber 210 so that the pressure inside the pressurization chamber 210 is between 3 bar and 30 bar, wherein if the pressure is below 3 bar, the battery cell 100 may not be sufficiently pressurized, and if the pressure is above 30 bar, there is a risk that the battery cell 100 may be damaged.

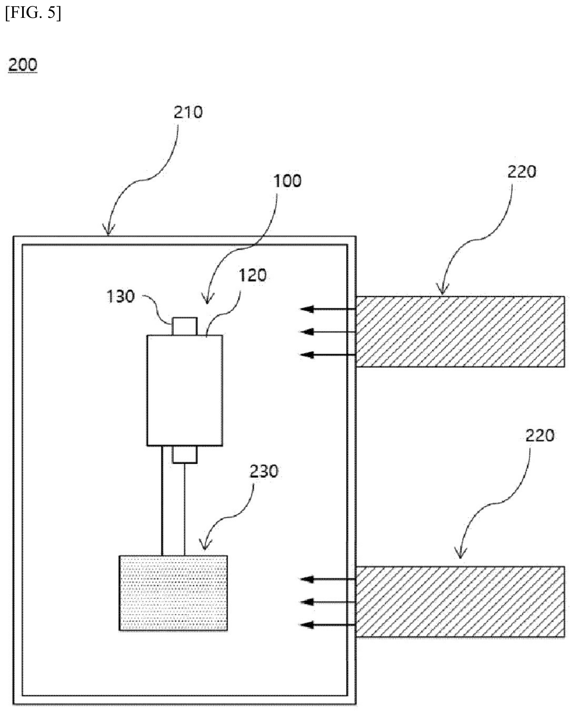

FIG. 5 is a schematic diagram illustrating a variant of the battery cell quality inspection device 200 of the present disclosure.

The battery cell quality inspection device 200 of the present disclosure may utilize at least one or more pressurization units 220. For example, two pressurization units 220 may be used, as shown in FIG. 5.

In this way, the plurality of pressurization units 220 can effectively reduce the time to reach the desired pressure.

### Battery cell 100 quality inspection method

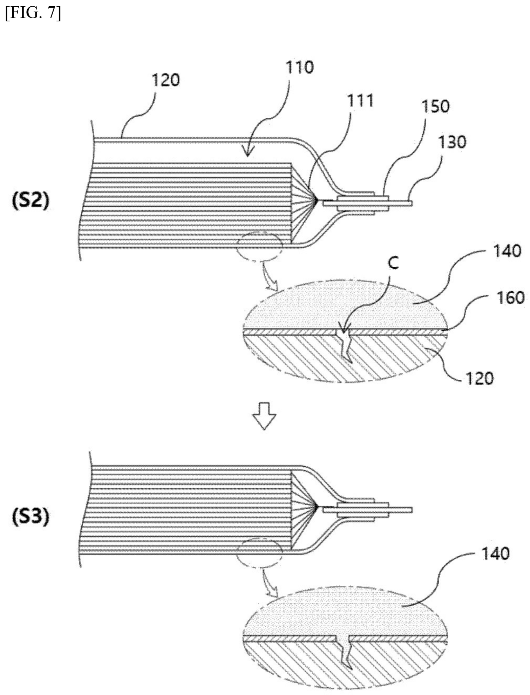

FIG. 6 is a schematic illustration of a process for a battery cell 100 quality inspection method of the present disclosure, and FIG. 7 is a cross-sectional view illustrating the deformation of the interior of the battery cell 100 by pressurization.

The quality inspection of the battery cell 100 of the present disclosure is performed using the battery cell quality inspection device 200 of the present disclosure.

The quality inspection of the battery cell 100 of the present disclosure can be divided into several steps, as illustrated in FIG. 6.

#### First step (S1)

This is a step of inserting the battery cell 100 inside a pressurization chamber 210 equipped with a pressurization unit 220.

The battery cell 100 is mounted inside the pressurization chamber 210, which is hermetically sealed as shown in FIG. 6.

#### Second step (S2).

This is a step of connecting an instrument 230 to the battery cell 100.

The instrument 230 is electrically connected to the electrode leads 130 and the battery case 120 of the battery cell 100 in order to inspect the insulation resistance of the battery cell 100 mounted inside the pressurization chamber 210. For example, the instrument 230 may be connected to the negative electrode lead 130 and the battery case 120 of the battery cell 100 via a wire 231, respectively.

The instrument 230 applies a voltage to the battery cell 100 and measures if a leakage current occurs.

The voltage applied may be from 1 V to 2000 V.

#### Third step (S3)

This is a step of increasing the pressure inside the pressurization chamber 210 via the pressurization unit 220.

The battery cell 100 quality inspection method of the present disclosure is characterized by increasing the pressure inside the pressurization chamber 210 and measuring the insulation resistance of the battery cell 100 through the instrument 230.

Thus, once the instrument 230 is connected and ready to measure the insulation resistance of the battery cell 100, the pressurization unit 220 is activated to increase the pressure inside the pressurization chamber 210.

The pressure inside the pressurization chamber 210 is preferably from 3 bar to 30 bar. In this case, if the pressure inside the pressurization chamber 210 is less than 3 bar, it will not be possible to deliver sufficient pressure to the battery cell 100, and if the pressure inside the pressurization chamber 210 exceeds 30 bar, there is a risk of damage to the battery cell 100.

The quality inspection of the battery cell 100 of the present disclosure regulates the pressure inside the pressurization chamber 210 within the above pressure range and observes whether a leakage current occurs in the battery cell 100, and based on this, the insulation resistance of the battery cell 100 is obtained.

The insulation resistance is obtained by the following Equation 1.

$$[\text{Equation 1}]$$

$$Rx \text{ (insulation resistance)} = Va/Ib$$

(Va is the voltage applied by the instrument 230, and Ib is the leakage current).

The power unit 232 included in the instrument 230 applies a voltage to the battery cell 100 and checks the leakage current with the current measurement unit 233.

In a normal battery cell 100, the battery case 120 will remain electrically isolated from the electrode assembly 110 or electrode leads 130, so that there will be no leakage current observed through the instrument 230.

Conversely, in the case of a micro-crack C occurring inside the battery case 120 of the battery cell 100, the external pressure will cause the electrolyte 140 to penetrate into the micro-crack C and break the insulation. Therefore, a leakage current will be observed through the instrument 230.

Referring to FIG. 7, a part of the battery case 120 is pressed down by pressure, and by the pressing, the electrolyte 140 penetrates into the micro-cracks C inside the battery case 120. Therefore, the battery cell 100 into which the electrolyte 140 is penetrated can be viewed as having its internal insulation destroyed, and there is a possibility that a low voltage may be generated by an internal short circuit or that its performance may be degraded.

Above, the present disclosure has been described in more detail with reference to the drawings and embodiments. However, it should be understood that the configurations shown in the drawings or embodiments described herein are only one embodiment of the present disclosure and do not represent all of the technical ideas of the present disclosure, and that there may be various equivalents and modifications that may be substituted for them at the time of filing the present application.

(Description of Reference Numerals)

100: BATTERY CELL

110: ELECTRODE ASSEMBLY

111: ELECTRODE TAB

120: BATTERY CASE

130: ELECTRODE LEAD

140: ELECTROLYTE

150: INSULATION FILM

160: CASE FILM

200: BATTERY CELL QUALITY INSPECTION DEVICE

210: PRESSURIZATION CHAMBER

220: PRESSURIZATION UNIT

230: INSTRUMENT

231: WIRE

232: POWER UNIT

233: CURRENT MEASUREMENT UNIT

C: CRACK

S1: FIRST STEP

S2: SECOND STEP

S3: THIRD STEP

**Claims**

1.   A battery cell quality inspection device for measuring the presence of cracks inside a battery cell, comprising:

a pressurization chamber accommodating a battery cell therein;

at least one pressurization unit coupled to the pressurization chamber to increase a pressure inside the pressurization chamber; and

an instrument for measuring an insulation resistance of the battery cells accommodated inside the pressurization chamber, wherein

the battery cell is contracted by increasing the pressure inside the pressurization chamber.

2. The battery cell quality inspection device of claim 1, wherein
the pressurization unit injects a gas inside the pressurization chamber to increase the pressure.

3. The battery cell quality inspection device of claim 1, wherein
the pressurization chamber has a sealed structure to prevent gas from entering or leaving the pressurization chamber.

4. The battery cell quality inspection device of claim 1, wherein
the pressurization unit pressurizes the pressurization chamber such that the pressure inside the pressurization chamber is between 3 bar and 30 bar.

5. The battery cell quality inspection device of claim 1, wherein
the pressurization chamber has a strength that is not deformed by the pressure applied by the pressurization unit.

6. The battery cell quality inspection device of claim 1, wherein
the instrument is electrically connected to a battery cell accommodated inside the pressurization chamber to measure insulation resistance.

7. The battery cell quality inspection device of claim 1, wherein
the battery cell is a pouch-type secondary battery comprising: an electrode assembly having alternately stacked electrodes and separators; a pair of electrode leads electrically connected to electrodes of the electrode assembly; a battery case enclosing the electrode assembly such that the electrode leads are drawn to the outside of the battery case; and an electrolyte filled inside the battery case with the electrode assembly.

8. The battery cell quality inspection device of claim 7, wherein
the instrument is electrically connected to the battery case and the at least one electrode lead of the battery cell to apply a voltage and measure insulation resistance over time.

9. A battery cell quality inspection method using the battery cell quality inspection device of claim 1 to measure whether a crack in the battery cell has occurred, comprising:

a first step of inserting a battery cell inside a pressurization chamber equipped with a pressurization unit;
a second step of connecting an instrument to the battery cell; and
a third step of increasing a pressure inside the pressurization chamber via the pressurization unit, wherein
the pressure inside the pressurization chamber is increased to measure the insulation resistance of the battery cell via the instrument.

10. The battery cell quality inspection method of claim 9, wherein
the pressurization unit pressurizes the pressurization chamber so that the pressure inside the pressurization chamber is from 3 bar to 30 bar.

11. The battery cell quality inspection method of claim 9, wherein

the insulation resistance is obtained by the following Equation 1:

[Equation 1]

$$Rx \text{ (insulation resistance)} = Va/Ib$$

wherein Va is a voltage applied by the instrument, and Ib is a leakage current.

[FIG. 1]

100

[FIG. 2]

[FIG. 3]

200

[FIG. 4]

[FIG. 5]

200

[FIG. 6]

[FIG. 7]

## INTERNATIONAL SEARCH REPORT

| International application No. |
| --- |
| **PCT/KR2025/095007** |

| A. | CLASSIFICATION OF SUBJECT MATTER |
| --- | --- |

**H01M 10/42**(2006.01)i; **G01N 19/08**(2006.01)i; **G01N 27/20**(2006.01)i

According to International Patent Classification (IPC) or to both national classification and IPC

| B. | FIELDS SEARCHED |
| --- | --- |

Minimum documentation searched (classification system followed by classification symbols)

H01M 10/42(2006.01); G01M 11/08(2006.01); G01N 3/12(2006.01); H01M 10/04(2006.01); H01M 50/105(2021.01); H01M 50/119(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 챔버(chamber), 압력(pressure), 계측(measurement), 절연저항(insulation resistance)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0077563 A (HYUNDAI MOTOR COMPANY et al.) 09 June 2022 (2022-06-09)<br>See paragraphs [0004] and [0036]-[0076], claim 8 and figures 1-2. | 1-11 |
| Y | KR 10-2024-0001519 A (HYUNDAI MOTOR COMPANY et al.) 03 January 2024 (2024-01-03)<br>See paragraphs [0040]-[0048] and claims 1-13. | 1-11 |
| A | KR 10-2390992 B1 (TITOB-ENG CO., LTD.) 27 April 2022 (2022-04-27)<br>See paragraphs [0067]-[0096] and figure 1. | 1-11 |
| A | KR 10-2015-0103772 A (SAMSUNG DISPLAY CO., LTD.) 14 September 2015 (2015-09-14)<br>See claims 1-20 and figure 1. | 1-11 |
| DA | KR 10-2023-0173521 A (ETS CO., LTD.) 27 December 2023 (2023-12-27)<br>See claims 1-13 and figure 5a. | 1-11 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 June 2025** | **25 June 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

15

## INTERNATIONAL SEARCH REPORT
### Information on patent family members

International application No.

**PCT/KR2025/095007**

| Patent document cited in search report | | | Publication date (day/month/year) | Patent family member(s) | | | Publication date (day/month/year) |
|---|---|---|---|---|---|---|---|
| KR | 10-2022-0077563 | A | 09 June 2022 | None | | | |
| KR | 10-2024-0001519 | A | 03 January 2024 | CN | 117309284 | A | 29 December 2023 |
| | | | | DE | 102022133871 | A1 | 28 December 2023 |
| | | | | US | 2023-0417816 | A1 | 28 December 2023 |
| KR | 10-2390992 | B1 | 27 April 2022 | WO | 2023-063586 | A1 | 20 April 2023 |
| KR | 10-2015-0103772 | A | 14 September 2015 | None | | | |
| KR | 10-2023-0173521 | A | 27 December 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240039851

- KR 1020230173521